# EUROPEAN PATENT APPLICATION

(11) **EP 2 241 981 A1**
(43) Date of publication of application: **20.10.2010**
(21) Application number: 09075372.4
(22) Date of filing: 18.08.2009
(51) Int. Cl.: G06F 17/30

(54) **Method for displaying a plug-in frame in a web browser, a computer readable medium, and a computer program product for executing the same**

(30) Priority: 14.04.2009 TW 98112370
(71) Applicant: Acer Incorporated, Hsichih, Taipei Hsien 221 (TW)
(72) Inventor: Chou, Chih-Hung, 221 Taipei Hsien (TW); Chang, Yung-Ting, 221 Taipei Hsien (TW)
(74) Representative: Altenburg, Bernardus Stephanus Franciscus

(57) **Abstract**

A method for displaying a plug-in frame in a web browser, a computer readable medium, and a computer program product for executing the same are disclosed. The method includes the steps of: constructing each webpage element when a webpage of the web browser is opened or content of a webpage is altered; determining whether each webpage element is a plug-in frame; if yes, obtaining related data of each plug-in frame; arranging each required webpage element from bottom to top to generate a display list; calculating an intersection of each plug-in frame and each webpage element according to the display list; obtaining a new window mask of each plug-in frame according to the related data and the intersection; and displaying each webpage element located above each plug-in frame in the web browser according to the new window mask.

## Description

### BACKGROUND OF THE INVENTION

### 1. Field of the Invention

The present invention relates to a method for displaying a plug-in frame in a web browser, and a computer readable medium as well as a computer program product for executing the same; more particularly, the present invention relates to a method, a computer readable medium and a computer program product capable of displaying a plug-in frame without covering webpage elements.

### 2. Description of the Related Art

Plug-ins are procedures used for adding functions to application programs. Plug-ins are commonly used in games, web browsers and media players. In known prior arts, web browsers such as Internet Explorer, Netscape, Mozilla Suite, Mozilla Firefox and Opera allow users to use plug-ins to enhance web browser functions.

A plug-in can connect with both the web browser and a third-party program, so as to embed a third party program window into a web browser window, such that a webpage designer can call different programs from the web browser for being integrated into the same webpage. For web browsers, generally installed plug-ins include Macromedia Flash players and Java Runtime Environments (JRE). Further, there are also plug-ins capable of executing Adobe Acrobat or RealPlayer in the web browser.

However, in known prior arts, if a plug-in itself does not support a window transparent function of a specific web browser, the content of the plug-in would cover hypertext markup language (HTML) elements which should be displayed over the plug-in, thereby resulting in user inconvenience.

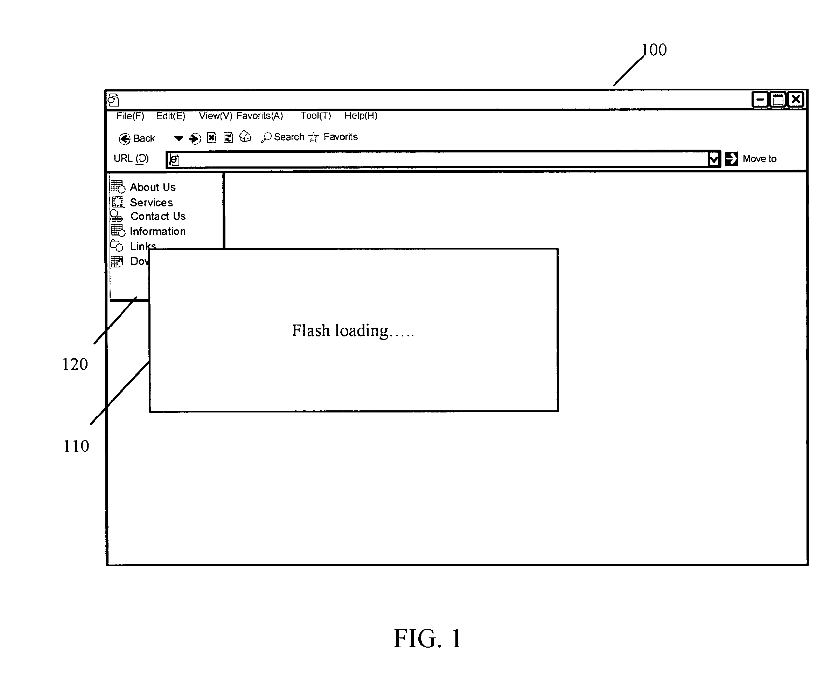

For example, as shown in FIG. 1, because a plug-in 110 itself displayed in a web browser 100 does not support the window transparent function of the web browser 100, the content of the plug-in 110 would cover partial content of HTML elements 120 which should be displayed over the plug-in 110, such that the user cannot click or browse the covered partial content, thereby resulting in user inconvenience.

Although the abovementioned problems can be solved by means of providing a plug-in capable of supporting the window transparent function of the web browser, design difficulties for a plug-in designer still exist because there are too many different web browsers (such as Internet Explorer, Netscape, Firefox and Opera), and the plug-in designer has to provide a plug-in capable of supporting the window transparent function of all kinds of web browsers so as to completely solve the problem that the plug-in covers the HTML elements.

Therefore, there is a need to provide a novel method for displaying a plug-in, such that the content of the HTML elements which should be displayed over the plug-in would not be covered even when the plug-in does not support the window transparent function, so as to mitigate and/or obviate the aforementioned problems.

### SUMMARY OF THE INVENTION

It is an object of the present invention to provide a method for displaying a plug-in frame in a web browser, and a computer readable medium as well as a computer program product for executing the same.

The method for displaying a plug-in frame in a web browser of the present invention comprises the steps of: constructing each webpage element when a webpage of the web browser is opened or content of a webpage is altered; determining whether each webpage element is a plug-in frame; if yes, obtaining related data of each plug-in frame; arranging each required webpage element from bottom to top to generate a display list; obtaining a mask area which is an intersection where each webpage element overlaps with each plug-in frame located thereunder; obtaining an unmask area which is an intersection where each webpage element overlaps with each plug-in frame located thereabove; obtaining a new window mask of each plug-in frame according to the related data, the mask area and the unmask area; and displaying each webpage element located above each plug-in frame in the web browser according to the new window mask.

Further, the present invention provides a computer readable medium stored with a program, wherein when a computer loads the program and then executes the program, the computer can complete the abovementioned method.

Moreover, the present invention provides a computer program product having a program, wherein when a computer loads the program and then executes the program, the computer can complete the abovementioned method.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 illustrates a schematic drawing for displaying a plug-in frame in a web browser according to a known prior art.
FIG. 2 is a flowchart of a method for displaying a plug-in frame in a web browser according to one preferred embodiment of the present invention.
FIGs. 3 to 13 illustrate schematic drawings of the method for displaying the plug-in frame in the web browser according to one preferred embodiment of the present invention.
FIG. 14 illustrates a schematic drawing of a computer readable medium according to one preferred embodiment of the present invention.
FIG. 15 illustrates a schematic drawing of a computer program product according to one preferred embodiment of the present invention.

### DETAILED DESCRIPTION OF THE PREFERRED EMBODIMENT

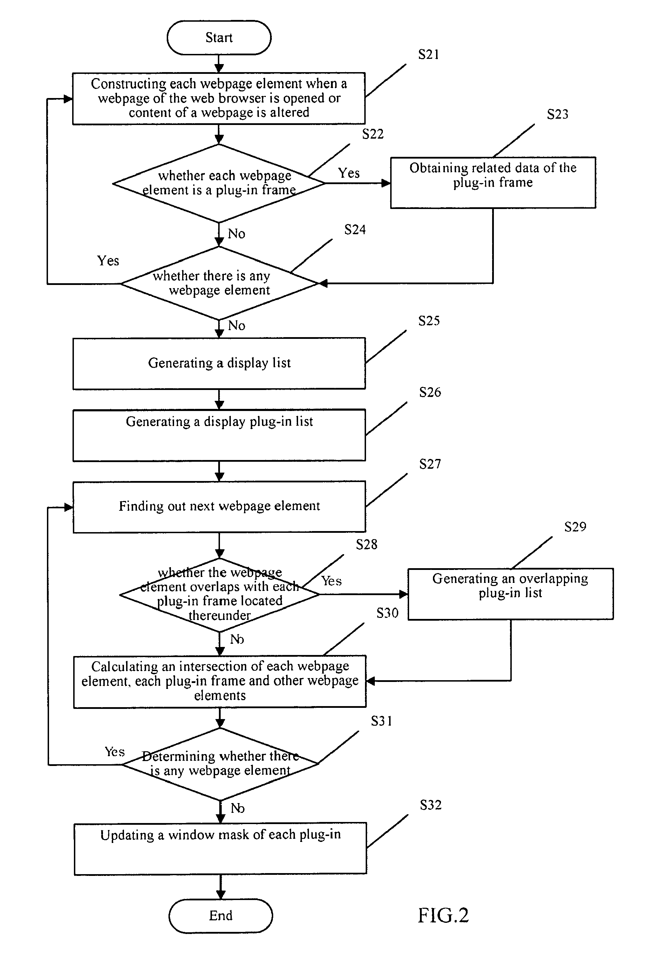

Please refer to FIG. 2, which is a flowchart of a method for displaying a plug-in frame in a web browser according to one preferred embodiment of the present invention.

As shown in FIG. 2, the present invention firstly performs step S21: constructing each webpage element when a webpage of the web browser is opened or content of a webpage is altered.

In step S21, when a webpage of the web browser is opened or content of a webpage is altered, the present invention would construct each webpage element according to hypertext markup language (HTML) elements of the content of the webpage.

Then, the present invention performs step S22: determining whether each webpage element is a plug-in frame.

In step S22, when constructing each webpage element, the present invention would determine whether an under-construction webpage element is a plug-in frame. If yes, the present invention executes step S23; otherwise, the present invention executes step S24.

If the under-construction webpage element is a plug-in frame, the present invention then executes step S23: marking the webpage element as a plug-in frame, and obtaining related data of the plug-in frame.

In step S23, the related data obtained by the present invention comprises, but is not limited to: an original window mask of each plug-in frame, an overlapping area of each plug-in frame and other webpage elements, and data such as width, length, x-axis value and y-axis value of each plug-in frame. Further, in one preferred embodiment of the present invention, the related data of each plug-in frame can be stored in a database in the form of a data structure, but please note that the implementation of the present invention is not limited to the above description.

If the under-construction webpage element is not a plug-in frame, the present invention then executes step S24: constructing next webpage element if there is any. Then, the present invention repeatedly performs steps S21 to S24 until all webpage elements have been constructed.

Then, the present invention performs step S25: arranging each required webpage element from bottom to top to generate a display list.

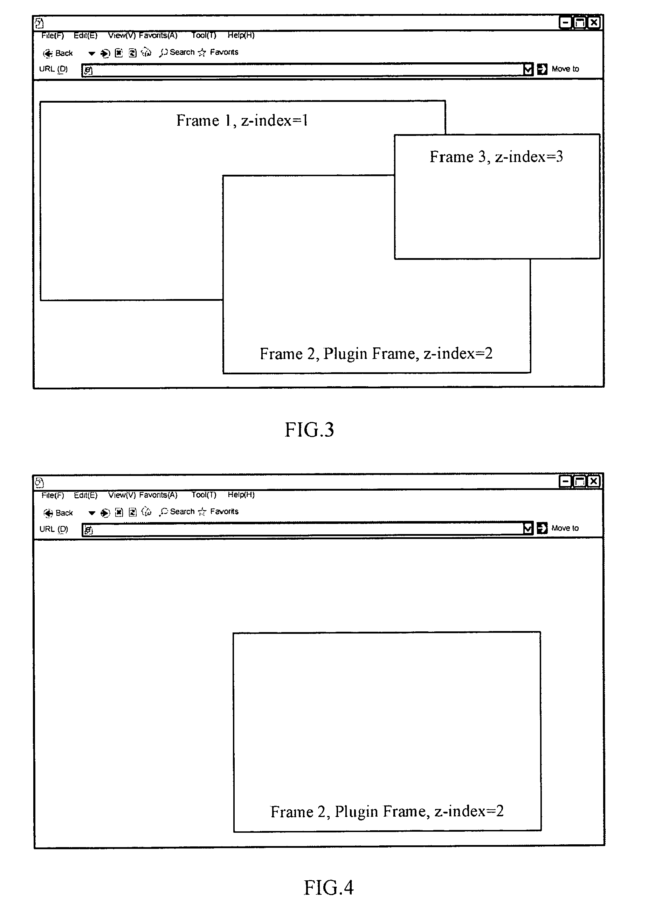

In step S25, the present invention arranges each required webpage element from bottom to top to generate a display list. For example, as shown in FIG. 3, if each of the required webpage elements includes Frame 1, Frame 2 and Frame 3, then the present invention arranges each webpage element from a bottom layer to a top layer, so as to generate the following display list: "Frame 1, z-index=1", "Frame 2, Plugin Frame, z-index=2" and "Frame 3, z-index=3". According to the display list, Frame 1 is located on the first layer of the z-axis; Frame 2 is a plug-in frame and is located on the second layer of the z-axis; and Frame 3 is located on the third layer of the z-axis. Please note that the display list as shown in FIG. 3 is only an exemplary schematic drawing without limiting the scope of the present invention. Further, in one preferred embodiment of the present invention, the display list can be stored in the database in the form of a data structure, but please note that the implementation of the present invention is not limited to the above description.

Then, the present invention performs step S26: searching the display list for finding out each marked plug-in frame, so as to generate a display plug-in list.

For example, as shown in FIG. 4, the present invention can find out that Frame 2 is a plug-in frame by means of searching the display list as shown in FIG. 3, so as to generate the following display plug-in list: "Frame 2, Plugin Frame, z-index=2". Please note that the display plug-in list as shown in FIG. 4 is only an exemplary schematic drawing without limiting the scope of the present invention. Further, in one preferred embodiment of the present invention, the display plug-in list can be stored in the database in the form of a data structure, but please note that the implementation of the present invention is not limited to the above description.

Then, the present invention performs steps S27 to S32 for displaying each webpage element. Please refer to FIGs. 3 to 9 for more details about steps S27 to S32 described hereinafter.

As shown in FIG. 3, the required webpage elements include Frame 1, Frame 2 and Frame 3. Also as shown in FIG. 3 and FIG. 4, Frame 2 is a plug-in frame.

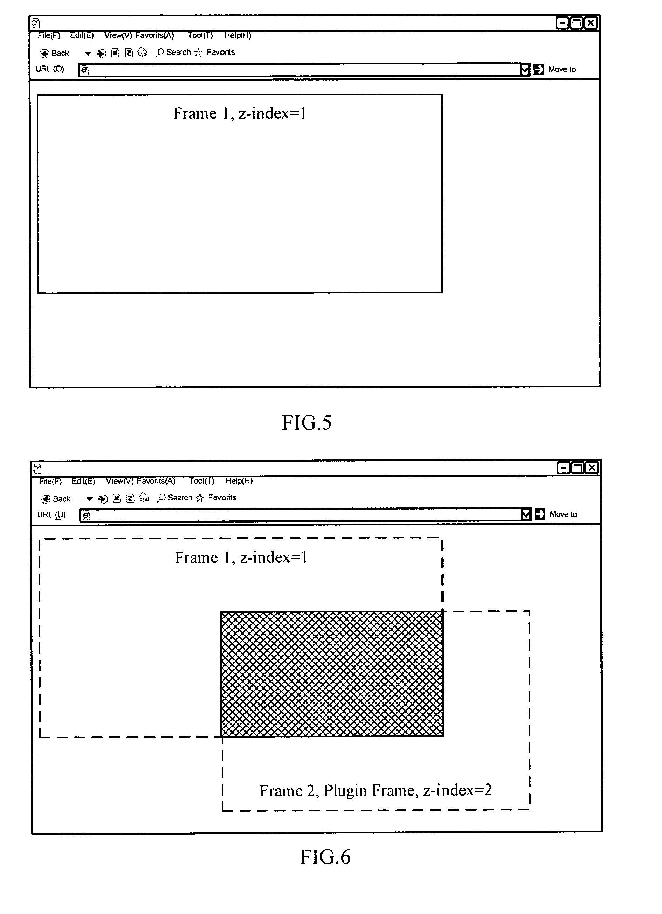

Firstly, the present invention performs step S27: finding out next webpage element. As shown in FIG. 5, because Frame 1 is the webpage element located on the lowest/bottom layer, Frame 1 is required to be firstly taken care of.

Then, the present invention performs step S28: determining whether each webpage element overlaps with each plug-in frame located thereunder. If yes, the present invention performs step S29; otherwise, the present invention performs step S30: calculating an intersection of each webpage element, each plug-in frame and other webpage elements.

Because Frame 1 is the webpage element located on the lowest/bottom layer without overlapping with any plug-in frame located thereunder, the present invention then performs step S30: calculating an intersection of Frame 1, Frame 2 (a plug-in frame) and Frame 3 (a webpage element).

Firstly, the present invention calculates a mask area, which is an intersection where each webpage element overlaps with each plug-in frame located thereunder. As shown in FIG. 3, because Frame 1 does not have any plug-in frame located thereunder, there is no mask area.

Next, the present invention calculates an unmask area, which is an intersection where each webpage element overlaps with each plug-in frame located thereabove. As shown in FIG. 3, Frame 2 is a plug-in frame located above Frame 1. Therefore, as shown in FIG. 6, the unmask area of Frame 1 is the intersection of Frame 1 and Frame 2.

Then, the present invention obtains a new window mask according to the mask area and the unmask area based on the following calculation: (new window mask) = ((original window mask) - (unmask area)) U (mask area).

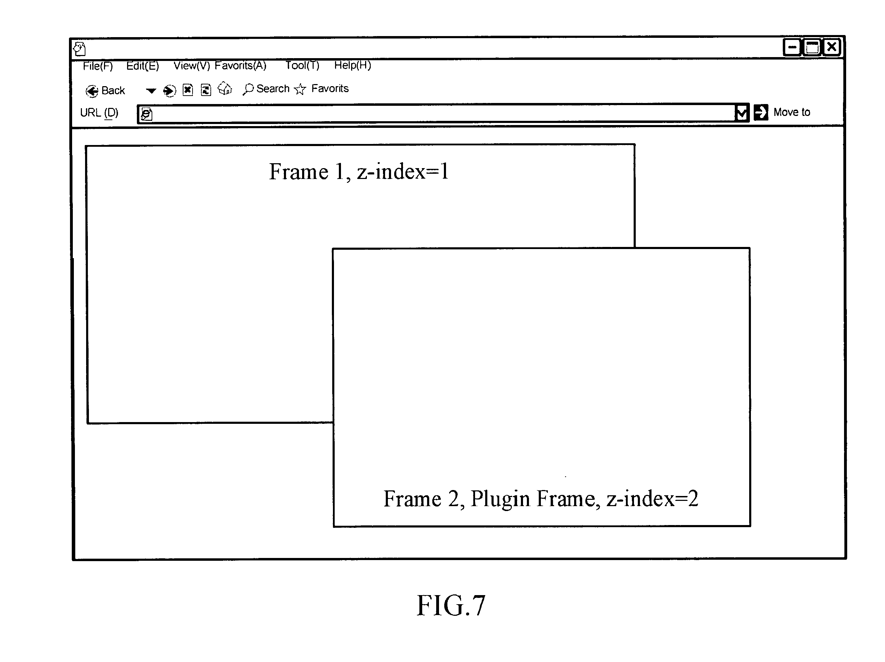

In the case of Frame 1, there is no original window mask and no mask area. Therefore, (new window mask) = ((empty set) - (unmask area)) U (empty set) = (empty set). That is, as shown in FIG. 7, there is no mask located above Frame 2; therefore Frame 2 would cover partial content of Frame 1.

Then, the present invention performs step S31: determining whether any webpage element is required to be displayed. If yes, the present invention performs step S27; otherwise, the present invention performs step S32. In the case of FIG. 3, because there are still Frame 2 and Frame 3 required to be displayed, the present invention then performs step S27: finding out next webpage element, which is Frame 2. Then, the present invention determines whether Frame 2 overlaps with each plug-in frame located under Frame 2. In this embodiment, Frame 2 itself is a plug-in frame, and does not overlap with any plug-in frame located thereunder; therefore, the present invention then performs step S30: calculating an intersection of Frame 2, Frame 1 (a webpage element) and Frame 3 (also a webpage element).

Firstly, the present invention calculates a mask area, which is an intersection where each webpage element overlaps with each plug-in frame located thereunder. As shown in FIG. 3, because Frame 2 does not have any plug-in frame located thereunder, there is no mask area.

Next, the present invention calculates an unmask area, which is an intersection where each webpage element overlaps with each plug-in frame located thereabove. As shown in FIG. 3, because Frame 2 does not have any plug-in frame located thereabove, there is no unmask area.

In the case of Frame 2, there is no original window mask, no mask area and no unmask area. Therefore, (new window mask) = ((empty set) - (empty set)) U (empty set) = (empty set). That is, as shown in FIG. 7, there is no mask located above Frame 2; therefore Frame 2 would cover partial content of Frame 1.

Then, the present invention performs step S31: determining whether any webpage element is required to be displayed. If yes, the present invention performs step S27; otherwise, the present invention performs step S32. In the case of FIG. 3, because there is still Frame 3 required to be displayed, the present invention then performs step S27: finding out next webpage element, which is Frame 3. Then, the present invention determines whether Frame 3 overlaps with each plug-in frame located under Frame 3. In this embodiment, Frame 3 overlaps with Frame 2 (a plug-in frame) located thereunder; therefore, the present invention then performs step S29: generating an overlapping plug-in list, so as to put Frame 2 in the overlapping plug-in list. Then, the present invention performs step S30: calculating an intersection of Frame 3, Frame 1 (a webpage element) and Frame 2 (a plug-in frame).

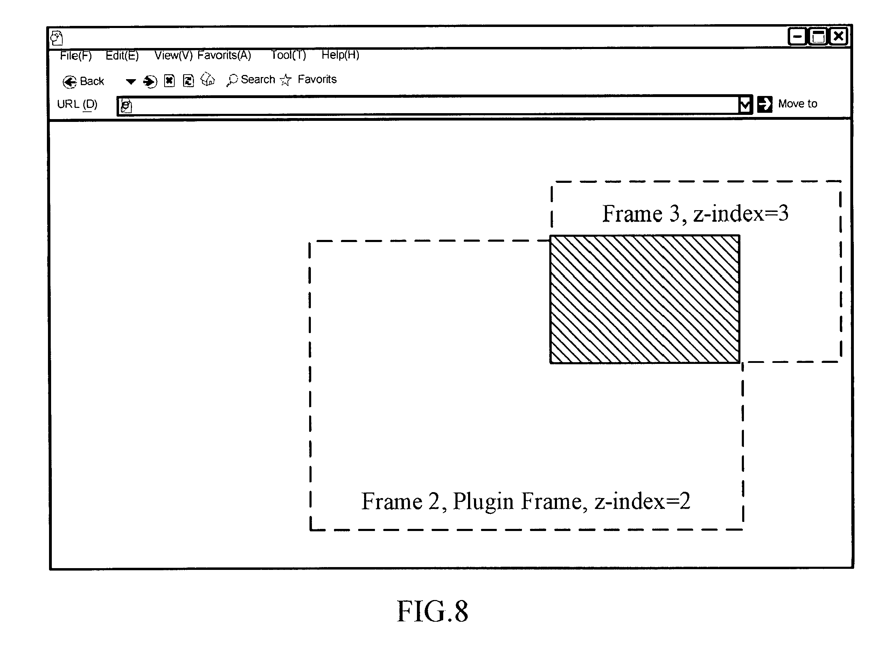

Firstly, the present invention calculates a mask area, which is an intersection where each webpage element overlaps with each plug-in frame located thereunder. As shown in FIG. 8, the shaded area is an intersection where Frame 3 overlaps with Frame 2 located thereunder; that is, the shaded area is the mask area.

Next, the present invention calculates an unmask area, which is an intersection where each webpage element overlaps with each plug-in frame located thereabove. As shown in FIG. 3, because Frame 3 does not have any plug-in frame located thereabove, there is no unmask area.

Therefore, (new window mask) = ((empty set) - (empty set)) U (shaded area as shown in FIG. 8) = (shaded area as shown in FIG. 8). That is, as shown in FIG. 8, a mask of the shaded area for Frame 2 would be generated accordingly.

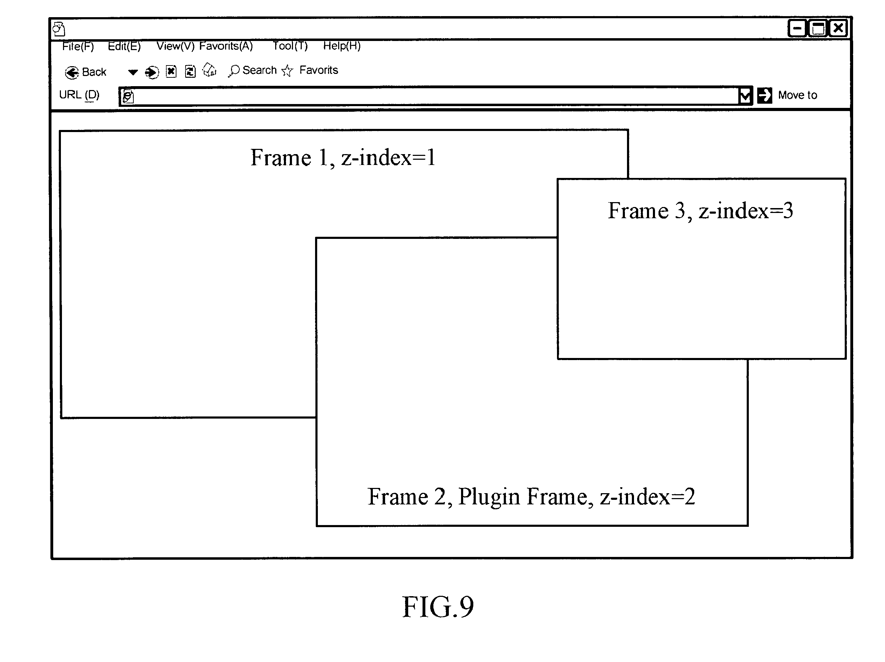

Because all webpage elements have been processed, the present invention then performs step S32: updating a window mask of each plug-in. According to the updated result as shown in FIG. 9, a transparent window mask (as shown in FIG. 8) would be generated in Frame 2, such that the window mask area of Frame 2 would become transparent, and therefore Frame 3 (a webpage element) located above Frame 2 can be completely displayed in the web browser without being covered.

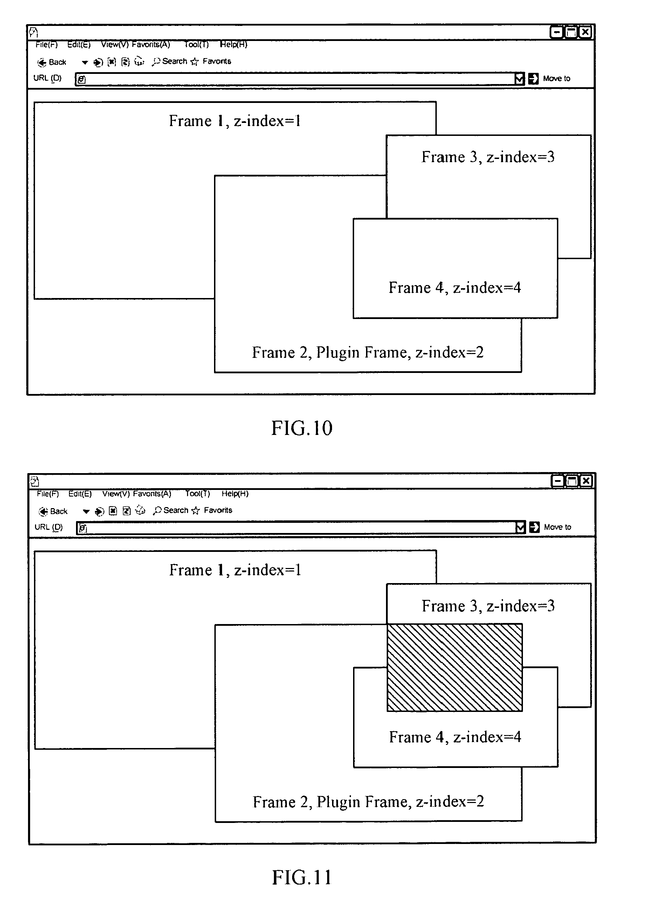

The abovementioned embodiment is related to a situation without any original window mask. Please refer to FIGs. 10 to 12 for another embodiment related to a situation with an original window mask.

As shown in FIG. 10, if content of a webpage is altered, Frame 4 would become a webpage element for being displayed. Also as shown in FIG. 11, Frame 2 has an original window mask. Therefore, the method of calculating a new window mask is as follows:

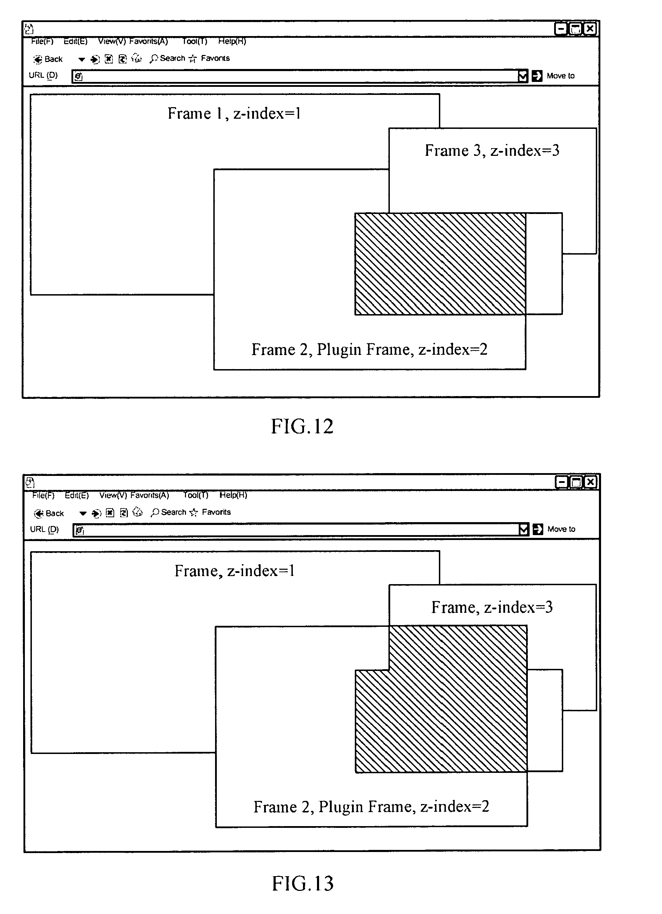

Firstly, the present invention calculates a mask area. As shown in FIG. 12, the shaded area is an intersection where Frame 4 overlaps with Frame 2 located thereunder; that is, the shaded area is the mask area.

Then, the present invention calculates an unmask area. Because Frame 4 does not have any plug-in frame located thereabove, there is no unmask area.

Therefore, (new window mask) = ((shaded area as shown in FIG. 11) - (empty set)) U (shaded area as shown in FIG. 12) = (shaded area as shown in FIG. 13). That is, as shown in FIG. 13, a mask of the shaded area for Frame 2 would be generated accordingly. As a result, after the present invention performs step S32 to update the window mask of each plug-in, Frame 3 (a webpage element) and Frame 4 (also a webpage element) located above Frame 2 can be completely displayed in the web browser without being covered.

The present invention further provides a computer readable medium stored with a program. When a computer loads the program and then executes it, the computer can execute steps S21 to S32 described above.

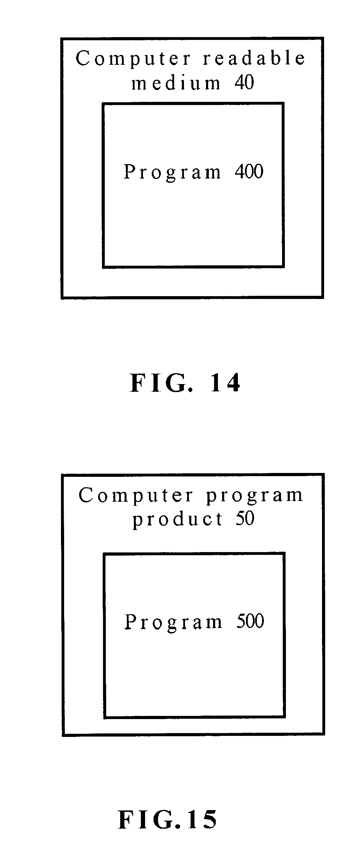

Please refer to FIG. 14, which illustrates a schematic drawing of the computer readable medium according to one preferred embodiment of the present invention.

As shown in FIG. 14, the computer readable medium 40 of the present invention is stored with a program 400. When a computer (not shown in figures) loads the program 400 and then executes it, the computer can complete steps S21 to S32 described above.

In one preferred embodiment of the present invention, the computer readable medium 40 is a data carrier, which can be but is not limited to: an optical disk, a hard disk drive, a USB drive or any other equivalent storage medium. The program 400 is a set of instructions. When the program 400 is stored in the computer readable medium, it provides data processing capability for the computer to point out, complete or accomplish a specific function, job or result.

The present invention further provides a computer program product, which has a program. When a computer loads the program and then executes it, the computer can execute the method described above.

Please refer to FIG. 15, which illustrates a schematic drawing of the computer program product according to one preferred embodiment of the present invention.

As shown in FIG. 15, the computer program product 50 comprises a program 500. When a computer (not shown in figures) loads the program 500 and then executes it, the computer can complete steps S21 to S32 described above.

In on preferred embodiment of the present invention, the computer program product 50 is an object, without being limited to its shape, loaded with a computer readable program. But please also note that the implementation of the present invention is not limited to the above description.

Although the present invention has been explained in relation to its preferred embodiments, it is to be understood that many other possible modifications and variations can be made without departing from the spirit and scope of the invention as hereinafter claimed.

## Claims

1. A method for displaying a plug-in frame in a web browser, comprising:
constructing each webpage element when a webpage of the web browser is opened or content of a webpage is altered;
determining whether each webpage element is a plug-in frame;
if yes, obtaining related data of each plug-in frame;
arranging each required webpage element from bottom to top to generate a display list;
calculating an intersection of each plug-in frame and each webpage element according to the display list;
obtaining a new window mask of each plug-in frame according to the related data and the intersection; and
displaying each webpage element located above each plug-in frame in the web browser according to the new window mask.

2. The method as claimed in claim 1, wherein the step of calculating the intersection further comprises:
obtaining a mask area, which is an intersection where each webpage element overlaps with each plug-in frame located under the webpage element; and
obtaining an unmask area, which is an intersection where each webpage element overlaps with each plug-in frame located thereabove.

3. The method as claimed in claim 1, comprising:
marking each plug-in frame; and
searching the display list for finding out each marked plug-in frame, so as to generate a display plug-in list.

4. The method as claimed in claim 2, comprising:
determining whether each webpage element overlaps with each plug-in frame located under the webpage element according to the display list;
if yes, generating an overlapping plug-in list; and
obtaining the mask area according to the overlapping plug-in list.

5. The method as claimed in claim 4, wherein the mask area is obtained according to the following step:
calculating an intersection of each webpage element and each plug-in in the overlapping plug-in list.

6. The method as claimed in claim 1, wherein the related data comprises an original window mask.

7. The method as claimed in claim 6, wherein the new window mask is obtained according to the following step:
joining each mask area after deducting the unmask area from the original window mask of each plug-in frame.

8. The method as claimed in claim 1, wherein the display list is generated according to hypertext markup language (HTML).

9. The method as claimed in claim 1, wherein the new window mask is configured as transparent, such that each webpage element located above each plug-in frame can be displayed in the web browser.

10. A computer program product, comprising a program, wherein when a computer loads the program and then executes the program, the computer can execute the method as claimed in claim 1.
